# EUROPÄISCHE PATENTSCHRIFT

(11) **EP 0 806 548 B1**
(45) Veröffentlichungstag und Bekanntmachung des Hinweises auf die Patenterteilung: **01.03.2000**
(21) Anmeldenummer: 97810216.8
(22) Anmeldetag: 11.04.1997
(51) Int. Cl.: F01D 25/24

(54) **Abgasturbine eines Abgasturboladers**
Turbine of an exhaust turbocharger
Turbine d'un turbocompresseur à gaz d'échappement

(30) Priorität: 08.05.1996 DE 19618314
(43) Veröffentlichungstag der Anmeldung: 12.11.1997
(73) Patentinhaber: Asea Brown Boveri AG, 5401 Baden (CH)
(72) Erfinder: Bättig, Josef, 5704 Egliswil (CH); Vögtli, Urs, 4143 Dornach (CH)
(74) Vertreter: Liebe, Rainer

(56) Entgegenhaltungen:
- DE-C- 928 746
- US-A- 4 477 086
- US-A- 5 395 211
- US-A- 5 423 659

## Beschreibung

### Technisches Gebiet

Die Erfindung betrifft die Abgasturbine eines mit einer Brennkraftmaschine verbundenen Abgasturboladers, gemäss dem Oberbegriff des Anspruchs 1.

### Stand der Technik

Beim Betrieb eines Abgasturboladers ist dessen Abgasturbine von Seiten der mit ihr verbundenen Brennkraftmaschine relativ hohen Temperaturen ausgesetzt. Somit entstehen in den turbinenseitigen Bauteilen, wie z.B. dem Gaseintrittgehäuse, dem Düsenring, dem Abdeckring und dem Gasaustrittgehäuse grosse thermische Spannungen. Da jedes dieser Bauteile einen anderen Abstand zur Brennkraftmaschine besitzt und zudem unterschiedliche Materialien verwendet werden, differieren die Bauteiltemperaturen entsprechend. Die Folge sind unterschiedliche Wärmedehnungen mit Relativbewegungen zwischen den einzelnen Komponenten, welche zu Schraubenbrüchen, Gasleckagen und Bauteilrissen führen können. Deshalb spielt die Ausbildung und Anordnung der Trennstellen von Gaseintrittgehäuse, Gasaustrittgehäuse, Düsenring und Abdeckring eine wesentliche Rolle für die Funktionsfähigkeit eines Abgasturboladers.

Aus der DE-A1-4223496 ist eine Verschraubung des Düsenrings mit dem Gaseintrittgehäuse bekannt. Dazu ist der Innenring des Düsenrings verdickt ausgebildet und mit einem zusätzlichen Flansch versehen, welcher die der Verbindung mit dem Gaseintrittgehäuse dienenden Schrauben aufnimmt.

Aufgrund der einseitigen Verschraubung kann es bei einer solchen Lösung zu irreversiblen Verwerfungen des Düsenrings kommen. Zudem besteht die Gefahr der Ausbildung einer Bypass-Strömung am Aussenring des Düsenrings, wodurch der Wirkungsgrad der Abgasturbine und damit der des Turboladers verringert wird. Wegen der grossen Wärmeentwicklung auf der Turbinenseite sitzen die zur Befestigung des Düsenrings dienenden Schrauben sehr fest und können nur sehr schwer gelöst werden. Damit wird die zum Auswechseln des Düsenrings erforderliche Montagezeit erheblich verlängert, was ein entscheidender Nachteil für die mit dem Abgasturbolader verbundene und in ihrer Leistung von diesem abhängige Brennkraftmaschine ist.

Das EP-B1-191380 zeigt die Abgasturbine eines Abgasturboladers, deren Düsenring durch den Abdeckring gegen das Gaseintrittgehäuse verklemmt wird. Dazu besitzt der Aussenring des Düsenrings eine axiale Auskragung und der Abdeckring einen korrespondierenden Befestigungsflansch. Letzterer ist durch mehrere Schrauben mit dem Gaseintrittgehäuse verbunden. In Umfangsrichtung wird der Düsenring mittels formschlüssiger Zentrierbolzen am Gaseintrittgehäuse fixiert.

Beide Lösungen weisen den gemeinsamen Nachteil auf, dass der Düsenring jeweils ein zusätzliches Bauteil zur Anordnung bzw. Aufnahme von Befestigungselementen aufweist. Dadurch ist er aufwendig in der Herstellung und somit relativ teuer. Ausserdem sind sowohl die axiale Auskragung des Aussenrings als auch der Flansch des Innenrings aufgrund der bereits weiter oben beschriebenen thermischen Spannungen anrissgefährdet, wodurch eine sichere Befestigung des Düsenrings und damit die Funktionsfähigkeit des Turboladers nicht dauerhaft gewährleistet ist.

### Darstellung der Erfindung

Die Erfindung versucht alle diese Nachteile zu vermeiden. Ihr liegt die Aufgabe zugrunde, die Abgasturbine eines Abgasturboladers so auszubilden, dass eine einfache und sichere Befestigung des Düsenrings gewährleistet ist.

Erfindungsgemäss wird dies dadurch erreicht, dass bei einer Vorrichtung gemäss dem Oberbegriff des Anspruchs 1, der Düsenring mit seinem Aussenring am Abdeckring und mit seinem Innenring am Gaseintrittgehäuse anliegt. Zwischen dem Aussenring und dem Gaseintrittgehäuse ist ein axialer sowie zwischen dem Aussenring und dem Gasaustrittgehäuse ein radialer Dehnungsspalt ausgebildet.

Die Vorteile der Erfindung liegen darin begründet, dass der Düsenring lediglich diagonal zwischen dem Gasaustrittgehäuse und dem Gaseintrittgehäuse verspannt ist. Aufgrund dieser Befestigung erfolgt der Kraftfluss im Düsenring ausgehend vom Abdeckring über den Aussenring, die Leitschaufeln und den Innenring, bis hin zum Gaseintrittgehäuse. Durch die beiden Dehnungsspalte kann sich der Düsenring sowohl in radiale als auch in axiale Richtung frei ausdehnen. Diese diagonale Verspannung des Düsenrings schafft die Voraussetzung für freie Wärmedehnungen zwischen den turbinenseitigen Bauteilen, so dass entweder keine thermischen Spannungen auftretenden oder diese ausgeglichen werden können.

Anrissgefährdete, den Düsenring versteifende Bauteile sind nicht vorhanden. Er ist somit relativ weich, d.h. elastisch ausgebildet und wirkt gewissermassen als Membran zwischen den ihn umgebenden Bauteilen. Da der Düsenring keine Befestigungsflansche besitzt ist er einfach und preisgünstig zu fertigen. Weil demzufolge zu seiner Befestigung keine Schrauben erforderlich sind, wird auch bei Montage und Demontage Arbeitszeit gespart. Als zusätzlicher Vorteil kann der Düsenring nunmehr von beiden Seiten, d.h. sowohl verdichterseitig als auch von Seiten der Brennkraftmaschine montiert werden.

Es ist besonders zweckmässig, wenn am Gasaustrittgehäuse eine Dichtfläche zum Gaseintrittgehäuse angeordnet ist. Radial ausserhalb der Dichtfläche ist zwischen dem Gasaustritt- sowie dem Gaseintrittgehäuse ein Montagespalt ausgebildet. Aufgrund dieser Ausbildung wird zwischen Gaseintritt- und Gasaustrittgehäuse eine gute Abdichtung erreicht.

Ferner ist es vorteilhaft, wenn die Spaltweite des axialen bzw. des radialen Dehnungsspalts grösser/gleich der maximalen Wärmedehnung von Aussenring und Gaseintrittgehäuse bzw. von Aussenring und Gasaustrittgehäuse ausgebildet ist.

Auf diese Weise wird sichergestellt, dass der Düsenring bei allen Betriebszuständen der Abgasturbine seine elastische Form behält, d.h. keine Spannungen auftreten. Im Extremfall kann der Aussenring in axialer Richtung am Gaseintrittgehäuse und in radialer Richtung am Gasaustrittgehäuse leicht anliegen, ohne dass die entstehende Pressung zu einer Materialabnutzung führt. Dies hat den Vorteil, dass Gasleckagen verhindert werden können.

Schliesslich weist sowohl der Aussen- als auch der Innenring jeweils eine deutlich geringere Materialdicke auf, als der Abdeckring bzw. das Gaseintrittgehäuse. Die sich daraus ergebenden minimalen Wanddickenunterschiede zwischen den Leitschaufeln des Düsenrings und seinem Aussen- bzw. Innenring haben nur geringe Wärmespannungen zur Folge.

Besonders vorteilhaft ist es, wenn Aussen- und Innenring aus Blech hergestellt sind. Damit kann der Düsenring sehr einfach und preisgünstig gefertigt werden.

In einer zweiten Ausgestaltungsform der Erfindung ist am Gaseintrittgehäuse ein sowohl mit diesem als auch mit dem Gasaustrittgehäuse in axialer Richtung formschlüssiges Klemmsegment angeordnet und mit Ausnehmungen für die Verbindungselemente versehen. Zwischen dem Gaseintrittgehäuse und dem Klemmsegment ist zumindest ein radialer Spalt ausgebildet. Im Gegensatz zur ersten Ausgestaltungsform können auf diese Weise auch die Wärmedehnungen des Gaseintrittgehäuses kompensiert werden. Demzufolge wird die Verbindungsstelle von Gaseintritt- und Gasaustrittgehäuse entlastet, so dass deutlich niedrigere Betriebsspannungen auftreten. Aus diesem Grund ist die Lösung insbesondere auch für thermisch hochbelastete Turbolader geeignet.

### Kurze Beschreibung der Zeichnung

In der Zeichnung sind zwei Ausführungsbeispiele der Erfindung anhand der Axialturbine eines Abgasturboladers dargestellt.

Es zeigen:
- Fig. 1: einen Teillängsschnitt des Abgasturboladers im Bereich der Abgasturbine;
- Fig. 2: einen vergrösserten Ausschnitt von Fig. 1, im Bereich des Aussenrings;
- Fig. 3: eine Darstellung entsprechend Fig. 1, jedoch in einem zweiten Ausführungsbeispiel.

Es sind nur die für das Verständnis der Erfindung wesentlichen Elemente gezeigt. Nicht dargestellt sind beispielsweise die Brennkraftmaschine und die Verdichterseite des Abgasturboladers. Die Strömungsrichtung des Arbeitsmittels ist mit Pfeilen bezeichnet.

### Weg zur Ausführung der Erfindung

Die Abgasturbine eines Turboladers weist ein von einem Gaseintritt- und einem Gasaustrittgehäuse 1, 2 gebildetes Turbinengehäuse 3 auf, welches mittels als Schrauben ausgebildeter Verbindungselemente 4 zusammengehalten wird. Im Turbinengehäuse 3 ist ein von einer Welle 5 getragenes Turbinenlaufrad 6 mit Lauf schaufeln 7 angeordnet. Das Turbinenlaufrad 6 wird nach aussen von einem als Diffusor ausgebildeten Abdeckring 8 begrenzt, welcher seinerseits durch Schrauben 9 am Gasaustrittgehäuse 2 befestigt ist. Zwischen dem Turbinenlaufrad 6 und dem Turbinengehäuse 3 ist ein Strömungskanal 10 ausgebildet, welcher die Abgase eines nicht dargestellten, mit dem Turbolader verbundenen Dieselmotors aufnimmt und zum Turbinenlaufrad 6 weiterleitet. Natürlich kann auch eine andere Brennkraftmaschine mit dem Turbolader verbunden sein.

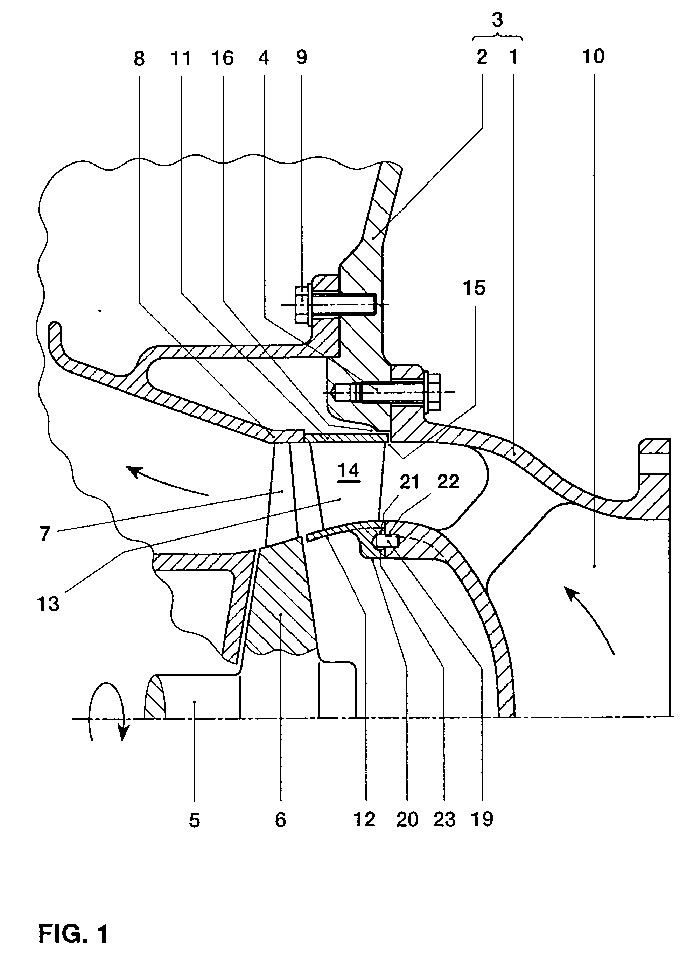

Stromauf des Turbinenlaufrades 6 ist im Strömungskanal 10 ein aus einem Aussenring 11, einem Innenring 12 sowie einer Anzahl dazwischen ausgebildeter Leitschaufeln 13 bestehender und als Gussteil ausgebildeter Düsenring 14 angeordnet. Letzterer ist axial zwischen dem Abdeckring 8 und dem Gaseintrittgehäuse 1 verspannt sowie radial innerhalb des Gasaustrittgehäuses 2 angeordnet. Dazu liegt der Düsenring 14 mit seinem Aussenring 11 am Abdeckring 8 und mit seinem Innenring 12 am Gaseintrittgehäuse 1 an. Sowohl sein Aussen- als auch der Innenring 11, 12 weisen jeweils eine deutlich geringere Materialdicke als der Abdeckring 8 bzw. das Gaseintrittgehäuse 1 auf (Fig. 1). Natürlich kann der Düsenring 14 auch aus anderen Materialien, wie beispielsweise aus Blech- oder Stahlprofilen gefertigt werden oder aus Keramik bestehen.

Zwischen dem Aussenring 11 und dem Gaseintrittgehäuse 1 ist ein axialer Dehnungsspalt 15 sowie zwischen dem Aussenring 11 und dem Gasaustrittgehäuse 2 ein radialer Dehnungsspalt 16 ausgebildet. Die Spaltweite der Dehnungsspalte 15, 16 ist grösser als die maximale Wärmedehnung von Aussenring 11 und Gaseintrittgehäuse 1 bzw. von Aussenring 11 und Gasaustrittgehäuse 2. Dabei beträgt das Verhältnis der Spaltweite des radialen Dehnungsspaltes 16 zur Spaltweite des axialen Dehnungsspaltes 15 etwa 4:1. Dieses Verhältnis ergibt sich aus den radialen und den axialen Abmessungen des Düsenrings 14. Natürlich können die Spaltweiten auch der maximalen Wärmedehnung der beteiligten Bauteile entsprechen.

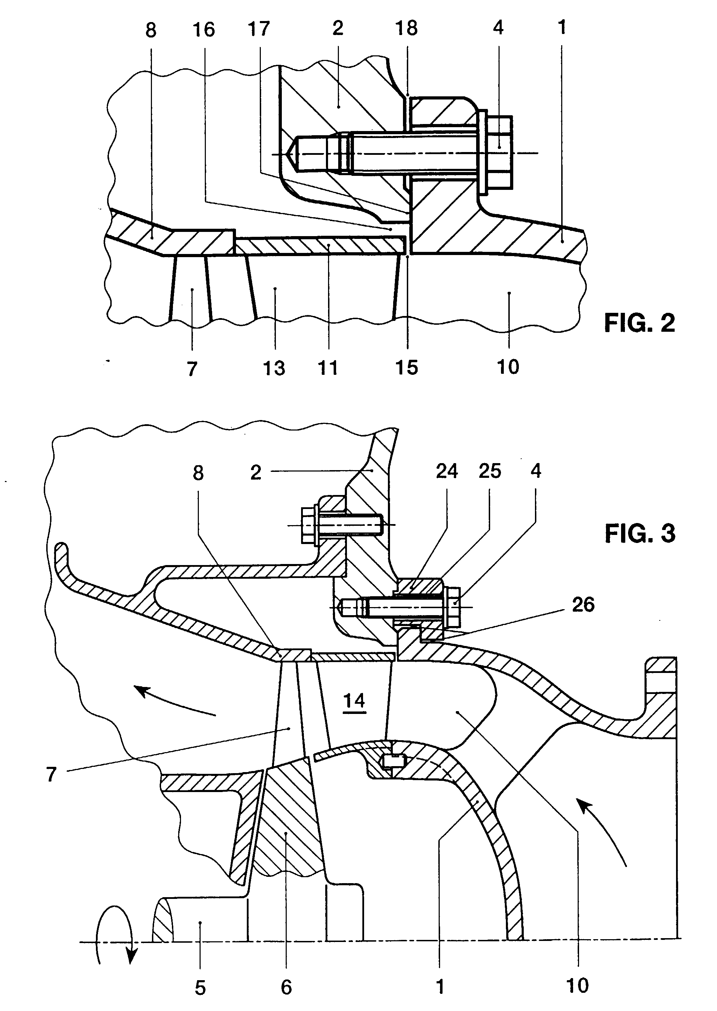

In Fig. 2 ist ein vergrösserter Ausschnitt von Fig. 1 dargestellt, welcher die Grössenverhältnisse der Spaltweiten in etwa verdeutlicht. Am radial inneren Bereich des Gasaustrittgehäuses 2 ist eine Dichtfläche 17 zum Gaseintrittgehäuse 1 ausgebildet. Radial ausserhalb dieser Dichtfläche 17 ist zwischen dem Gasaustrittgehäuse 2 sowie dem Gaseintrittgehäuse 1 ein Montagespalt 18 angeordnet.

Der Innenring 12 ist mittels mehreren als Stifte ausgebildeten Positionierlementen 19 verdrehsicher am Gaseintrittgehäuse 1 abgestützt. Zur Aufnahme der Stifte 19 besitzt der Innenring 12 an seiner stromaufwärtigen Seite eine entsprechende Anzahl von Verdickungen 20 mit ersten Ausnehmungen 21, während das Gaseintrittgehäuse 1 damit korrespondierende, zweite Ausnehmungen 22 aufweist. Jede der in den Verdickungen 20 angeordneten ersten Ausnehmungen 21 weist im Bereich des Stiftes 19 zusätzlich einen inneren Spalt 23 auf (Fig. 1).

Beim Betrieb des Dieselmotors gelangen dessen heisse Abgase über das Gaseintrittgehäuse 1 bzw. den darin angeordneten Strömungskanal 10 zum Turbinenlaufrad 6 der Abgasturbine. Dabei hat der Düsenring 14 die Aufgabe, die Abgase optimal auf die Laufschaufeln 7 des Turbinenlaufrades 6 zu leiten. Das somit angetriebene Turbinenlaufrad 6 sorgt seinerseits für den Antrieb des mit ihm verbundenen, nicht dargestellten Verdichters. Die im Verdichter komprimierte Luft wird zur Aufladung, d.h. zur Leistungssteigerung des Dieselmotors eingesetzt.

Der direkt im Strömungskanal 10 angeordnete Düsenring 14 ist bei diesem Vorgang den hohen Abgastemperaturen ausgesetzt. Weil seine Leitschaufeln 13 relativ dünn sind und der gesamte Düsenring 14 zudem eine wesentlich geringere Masse als das Gaseintrittgehäuse 1, das Gasaustrittgehäuse 2 bzw. der Abdeckring 8 besitzt, erfährt der Düsenring 14 einen deutlich grösseren Temperaturanstieg als die genannten, ihn umgebenden Bauteile.

Durch die erfindungsgemässe Ausbildung des radialen und des axialen Dehnungsspaltes 16, 15 kann sich der Aussenring 11 des Düsenrings 14 entsprechend den konkreten Betriebsbedingungen sowohl in radialer als auch in axialer Richtung frei ausdehnen. Dabei wird der wesentlich grösseren radialen Ausdehnung des Materials im Bereich zwischen dem Aussenring 11 und dem Gasaustrittgehäuse 2, gegenüber der möglichen axialen Ausdehnung von Aussenring 11 und Gaseintrittgehäuse 1 durch das o.g. Verhältnis der Spaltweiten von etwa 4:1 Rechnung getragen. Auf diese Weise können die sich zwischen dem Abdeckring 8, dem Gaseintrittgehäuse 1, dem Gasaustrittgehäuse 2 sowie dem Düsenring 14 ausbildenden thermischen Spannungen ausgeglichen werden. Der Düsenring 14 ist so zum einen diagonal zwischen dem Abdeckring 8 und dem Gaseintrittgehäuse 1 verspannt und wirkt zum anderen als Membran zwischen den ihn umgebenden Bauteilen. Durch die Ausbildung des Montagespalts 18 liegt die Dichtfläche 17 stets am Gaseintrittgehäuse 1 an. Die Dichtfläche 17 verhindert eine Abgasleckage an die Umgebung. Bei Verwendung von Blech als Material für den Düsenring 14 wird dessen flexible Ausbildung zusätzlich unterstützt.

Entspricht die Spaltweite des axialen und die des radialen Dehnungsspaltes 15, 16 der maximalen Wärmedehnung von Aussenring 11 und Gaseintrittgehäuse 1 bzw. von Aussenring 11 und Gasaustrittgehäuse 2, so liegt der Aussenring 11 bei Vollast des Dieselmotors axial am Gaseintrittgehäuse 1 und radial am Gasaustrittgehäuse 2 an. Dadurch werden die Dehnungsspalte 15, 16 während dem Betrieb der Abgasturbine verschlossen. Somit kann kein Abgas in den zwischen dem Aussenring 11, dem Gasaustrittgehäuse 2 und dem Diffusor 8 ausgebildeten Hohlraum eindringen. Auf diese Weise werden sowohl Störungen der Abgasströmung als auch Spaltverluste vermieden, was einen höheren Wirkungsgrad zur Folge hat.

In einem zweiten Ausführungsbeispiel ist am Gaseintrittgehäuse 1 ein sowohl mit diesem als auch mit dem Gasaustrittgehäuse 2 axial formschlüssiges Klemmsegment 24 angeordnet und mit als Bohrungen ausgebildeten Ausnehmungen 25 für die Schrauben 4 versehen. Zwischen dem Klemmsegment 24 und dem Gaseintrittgehäuse 1 sind radiale Spalte 26 ausgebildet (Fig. 3). Dadurch kann sich auch das Gaseintrittgehäuse 1 ohne Erhöhung seiner Betriebsspannungen radial ausdehnen. Die weitere Anordnung und Funktion der Bauteile ist analog dem ersten Ausführungsbeispiel.

### Bezugszeichenliste

- 1: Gaseintrittgehäuse
- 2: Gasaustrittgehäuse
- 3: Turbinenghäuse
- 4: Verbindungselement, Schraube
- 5: Welle
- 6: Turbinenlaufrad
- 7: Laufschaufel
- 8: Abdeckring, Diffusor
- 9: Schraube
- 10: Strömungskanal
- 11: Aussenring
- 12: Innenring
- 13: Leitschaufel
- 14: Düsenring
- 15: axialer Dehnungsspalt
- 16: radialer Dehnungsspalt
- 17: Dichtfläche
- 18: Montagespalt
- 19: Positionierlement, Stift
- 20: Verdickung, von 12
- 21: Ausnehmung, erste
- 22: Ausnehmung, zweite
- 23: Spalt, innen
- 24: Klemmsegment
- 25: Ausnehmung, Bohrung
- 26: Spalt, radial

## Patentansprüche

1. Abgasturbine eines Abgasturboladers, hauptsächlich bestehend aus
a) einem Gaseintritt- und einem Gasaustrittgehäuse (1, 2), welche mittels Verbindungselementen (4) zu einem Turbinengehäuse (3) verbunden sind,
b) einem im Turbinengehäuse (3) angeordneten und von einer Welle (5) getragenen Turbinenlaufrad (6),
c) einem im Gasaustrittgehäuse (2) befestigten Abdeckring (8) des Turbinenlaufrades (6),
d) einem stromauf des Turbinenlaufrades (6), axial zwischen Abdeckring (8) und Gaseintrittgehäuse (1) sowie radial innerhalb des Gasaustrittgehäuses (2) angeordneten Düsenring (14), welcher aus einem Aussenring (11), einem Innenring (12) sowie einer Anzahl dazwischen ausgebildeter Leitschaufeln (13) besteht, wobei der Innenring (12) mittels Positionierlementen (19) verdrehsicher am Gaseintrittgehäuse (1) abgestützt ist,
dadurch gekennzeichnet, dass
e) der Düsenring (14) mit seinem Aussenring (11) am Abdeckring (8) und mit seinem Innenring (12) am Gaseintrittgehäuse (1) anliegt,
f) zwischen dem Aussenring (11) und dem Gaseintrittgehäuse (1) ein axialer Dehnungsspalt (15) sowie zwischen dem Aussenring (11) und dem Gasaustrittgehäuse (2) ein radialer Dehnungsspalt (16) ausgebildet ist.

2. Abgasturbine nach Anspruch 1, dadurch gekennzeichnet, dass am Gasaustrittgehäuse (2) eine Dichtfläche (17) zum Gaseintrittgehäuse (1) angeordnet und radial ausserhalb der Dichtfläche (17) ein Montagespalt (18) zwischen Gaseintrittgehäuse (1) sowie Gasaustrittgehäuse (2) ausgebildet ist.

3. Abgasturbine nach Anspruch 1 oder 2, dadurch gekennzeichnet, dass die Spaltweite des axialen bzw. des radialen Dehnungsspalts (15, 16) grösser/gleich der maximalen Wärmedehnung von Aussenring (11) und Gaseintrittgehäuse (1) bzw. von Aussenring (11) und Gasaustrittgehäuse (2) ausgebildet ist.

4. Abgasturbine nach Anspruch 3, dadurch gekennzeichnet, dass sowohl der Aussen- als auch der Innenring (11, 12) jeweils eine deutlich geringere Materialdicke aufweisen als der Abdeckring (8) bzw. das Gaseintrittgehäuse (1).

5. Abgasturbine nach Anspruch 4, dadurch gekennzeichnet, dass sowohl der Aussen- als auch der Innenring (11, 12) aus Blech bestehen.

6. Abgasturbine nach einem der Ansprüche 1 bis 5, dadurch gekennzeichnet, dass am Gaseintrittgehäuse (1) ein sowohl mit diesem als auch mit dem Gasaustrittgehäuse (2) in axialer Richtung formschlüssiges Klemmsegment (24) angeordnet und mit Ausnehmungen (25) für die Verbindungselemente (4) versehen ist.

7. Abgasturbine nach Anspruch 6, dadurch gekennzeichnet, dass zwischen dem Gaseintrittgehäuse (1) und dem Klemmsegment (24) zumindest ein radialer Spalt (26) ausgebildet ist.

## Claims

1. Exhaust gas turbine of an exhaust gas turbocharger, principally comprising
a) a gas inlet and a gas outlet casing (1, 2), which are connected to form a turbine casing (3) by means of connecting elements (4),
b) a turbine rotor (6) which is arranged in the turbine casing (3) and is supported by a shaft (5),
c) a covering ring (8), which is fastened in the gas outlet casing (2), of the turbine rotor (6),
d) a nozzle ring (14), which is arranged upstream of the turbine rotor (6), axially between covering ring (8) and gas inlet casing (1) and radially inside the gas outlet casing (2) and comprises an outer ring (11), an inner ring (12) and a number of guide vanes (13) formed between the latter, the inner ring (12) being supported on the gas inlet casing (1) by means of positioning elements (19) in a manner secure against torsion,
characterized in that
e) the nozzle ring (14) bears against the covering ring (8) by means of its outer ring (11) and against the gas inlet casing (1) by means of its inner ring (12),
f) an axial expansion gap (15) is formed between the outer ring (11) and the gas inlet casing (1) and a radial expansion gap (16) is formed between the outer ring (11) and the gas outlet casing (2).

2. Exhaust gas turbine according to Claim 1, characterized in that a sealing surface (17) with respect to the gas inlet casing (1) is arranged on the gas outlet casing (2) and an assembly gap (18) is formed radially outside the sealing surface (17) between gas inlet casing (1) and gas outlet casing (2).

3. Exhaust gas turbine according to Claim 1 or 2, characterized in that the gap width of the axial and/or of the radial expansion gap (15, 16) is designed to be larger than or equal to the maximum thermal expansion of outer ring (11) and gas inlet casing (1) and of outer ring (11) and gas outlet casing (2), respectively.

4. Exhaust gas turbine according to Claim 3, characterized in that both the outer and also the inner ring (11, 12) each have a significantly smaller material thickness than the covering ring (8) and the gas inlet casing (1).

5. Exhaust gas turbine according to Claim 4, characterized in that both the outer and also the inner ring (11, 12) consist of sheet metal.

6. Exhaust gas turbine according to one of Claims 1 to 5, characterized in that a clamping segment (24), which is positively locking with the gas inlet casing (1) and also with the gas outlet casing (2) in the axial direction, is arranged on the said gas inlet casing and is provided with recesses (25) for the connecting elements (4).

7. Exhaust gas turbine according to Claim 6, characterized in that at least one radial gap (26) is formed between the gas inlet casing (1) and the clamping segment (24).

## Revendications

1. Turbine à gaz d'échappement d'un turbocompresseur à gaz d'échappement, se composant essentiellement de:
a)' un corps d'entrée et un corps de sortie des gaz (1, 2), qui sont assemblés en un corps de turbine (3) au moyen d'éléments d'assemblage (4),
b) une couronne mobile de turbine (6) disposée dans le corps de turbine (3) et portée par un arbre (5),
c) un anneau de recouvrement (8) de la couronne mobile de turbine (6) fixé dans le corps de sortie des gaz (2),
d) une couronne directrice (14) disposée en amont de la couronne mobile de turbine (6), axialement entre l'anneau de recouvrement (8) et le corps d'entrée des gaz (1) ainsi que radialement à l'intérieur du corps de sortie des gaz (2), qui se compose d'un anneau extérieur (11), d'un anneau intérieur (12) ainsi que d'un certain nombre d'aubes directrices (13)formées entre ceux-ci, dans laquelle l'anneau intérieur (12) est appuyé sur le corps d'entrée des gaz (1) sans possibilité de rotation au moyen de plusieurs éléments de positionnement (19),
caractérisée en ce que
e) la couronne directrice (14) s'appuie par son anneau extérieur (11) sur l'anneau de recouvrement (8) et par son anneau intérieur (11) sur le corps d'entrée des gaz (1), et
f) une fente de dilatation axiale (15) est formée entre l'anneau extérieur (12) et le corps d'entrée des gaz (1) ainsi qu'une fente de dilatation radiale (16) entre l'anneau extérieur (11) et le corps de sortie des gaz (2).

2. Turbine à gaz d'échappement suivant la revendication 1, caractérisée en ce qu'une face d'étanchéité (17) est disposée sur le corps de sortie des gaz (2) vers le corps d'entrée des gaz (1) et une fente de montage (18) est formée, radialement à l'extérieur de la face d'étanchéité (17), entre le corps d'entrée des gaz (1) et le corps de sortie des gaz (2).

3. Turbine à gaz d'échappement suivant la revendication 1 ou 2, caractérisée en ce que la largeur de la fente de dilatation axiale, respectivement radiale (15, 16), est supérieure/égale à la dilatation thermique maximale de l'anneau extérieur (11) et du corps d'entrée des gaz (1), respectivement de l'anneau extérieur (11) et du corps de sortie des gaz (2).

4. Turbine à gaz d'échappement suivant la revendication 3, caractérisée en ce que tant l'anneau extérieur que l'anneau intérieur (11, 12) présentent chacun une épaisseur de matière nettement plus faible que l'anneau de recouvrement (8), respectivement que le corps d'entrée des gaz (1) .

5. Turbine à gaz d'échappement suivant la revendication 4, caractérisée en ce que tant l'anneau extérieur que l'anneau intérieur (11, 12) sont fabriqués en tôle.

6. Turbine à gaz d'échappement suivant l'une quelconque des revendications 1 à 5, caractérisée en ce qu'un segment de serrage (24), à calage géométrique en direction axiale aussi bien avec le corps d'entrée des gaz (1) qu'avec le corps de sortie des gaz (2) est disposé sur le corps d'entrée des gaz (1) et est pourvu de creux (25) pour les éléments d'assemblage (4).

7. Turbine à gaz d'échappement suivant la revendication 6, caractérisée en ce qu'au moins une fente radiale (26) est formée entre le corps d'entrée des gaz (1) et le segment de serrage (24).
